# EUROPEAN PATENT APPLICATION

(11) **EP 4 137 301 A1**
(43) Date of publication of application: **22.02.2023**
(21) Application number: 20930924.4
(22) Date of filing: 11.11.2020
(51) Int. Cl.: B29D 11/00, B29C 33/38

(54) **FRESNEL LENS MOLD AND MANUFACTURING METHOD THEREFOR, AND MANUFACTURING METHOD FOR FRESNEL LENS**

(30) Priority: 13.04.2020 CN 202010283010
(71) Applicant: Chengdu FScreen Sci-Tech Co., Ltd, Chengdu, Sichuan 611731 (CN)
(72) Inventor: ZHANG, Yimin, Chengdu, Sichuan 611731 (CN); CHEN, Zhichao, Chengdu, Sichuan 611731 (CN); HU, Shijia, Chengdu, Sichuan 611731 (CN); WU, Qingfu, Chengdu, Sichuan 611731 (CN)
(74) Representative: Müller Schupfner & Partner Patent- und Rechtsanwaltspartnerschaft mbB
(86) International application number: PCT/CN2020/128039
(87) International publication number: WO 2021/208412

(57) **Abstract**

A Fresnel lens mold, comprising stacked bendable strips (300). An optical structure is provided on one edge of each strip (300); and the optical structure is the same as a lens structure on a corresponding endless strip (200) of a Fresnel lens. Further provided is a manufacturing method for the Fresnel lens mold, comprising: designing a Fresnel lens according to an optical characteristic requirement, selecting bendable strips (300), processing, on one edge of each strip (300), an optical structure that is the same as a lens structure on a corresponding endless strip (200) of the Fresnel lens, and according to the position of the endless strip of the Fresnel lens and the orientation of the lens structure on the endless strip, stacking the strip (300) on which the optical structure is processed, so as to obtain the Fresnel lens model. Further provided is a method for manufacturing a Fresnel lens by using the foregoing Fresnel lens mold. By stacking the strips, the Fresnel lens mold having any size and the shape of a non-concentric endless strip, and a localized Fresnel lens mold can be manufactured, and the Fresnel lens manufactured by using the mold is high in accuracy.

## Description

The present application claims the priority to Chinese Patent Application No. 202010283010.6, titled "FRESNEL LENS MOLD AND MANUFACTURING METHOD THEREFOR, AND MANUFACTURING METHOD FOR FRESNEL LENS", filed with the China National Intellectual Property Administration on April 13, 2020, which is in incorporated herein by reference in its entirety.

### FIELD

The present application relates to the technical field of optics, and in particular to a Fresnel lens mold and manufacturing method therefor, and a manufacturing method for Fresnel lens.

### BACKGROUND

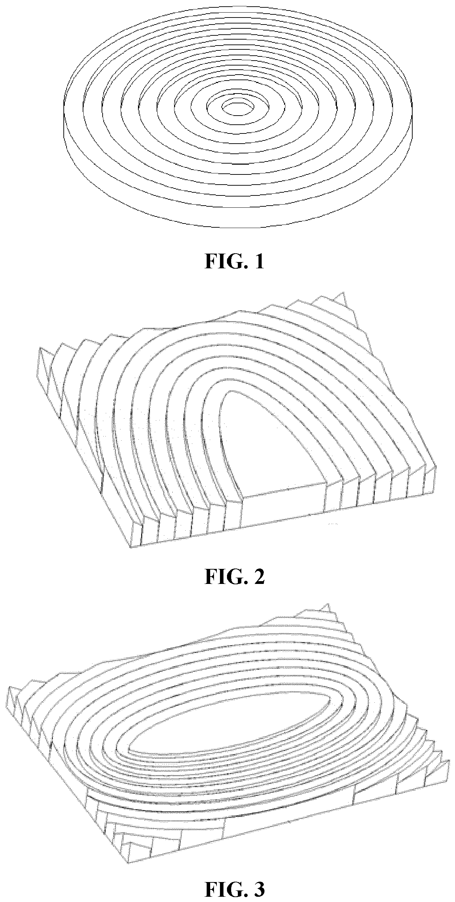

A Fresnel lens is composed of several optical structures arranged in sequence. The Fresnel lens can be an optical structure with regular shape. As shown in FIG. 1, a Fresnel lens is formed by the arrangement of strips of concentric annular optical structures. The Fresnel lens may also be composed of optical structures with irregular shapes, as shown in FIG. 2 and FIG. 3. The most commonly used manufacturing method of Fresnel lens is only adapted for Fresnel lens with small aperture, which is specifically in that: the annulus is machined on the flat blank by a precision lathe to make a flat mold, and the circular annulus on the flat mold is copied to the substrate by hot-pressing, pouring, molding, injection molding, ultraviolet curing and etc.. Currently, only a Fresnel lens annulus of flat mold with maximum 2m diameter can be manufactured in China, while that with a maximum diameter of 3.4m can be manufactured by Toshiba Corporation of Japan. Due to the limitation of the size of the processing lathe, it is impossible to obtain a mold with larger Fresnel lens annulus size. In addition, the larger the lathe, the more difficult it is to ensure the machining accuracy, and the accuracy of the optical structure is difficult to guarantee when manufacturing a larger size Fresnel lens.

With the development of society, the demand for large Fresnel lenses is increasing in some industries, such as solar concentrating and new display industries. Taking the new display industry as an example, the core optical element of the required rectangular laser TV screen is the rectangular Fresnel lens section, which is cut out from the circular Fresnel. If the required diameter of the circular Fresnel lens is more than 4 meters, a Fresnel lens mold with the corresponding size is needed, and the production of the Fresnel lens mold cannot be realized by using the existing machine tools.

Chinese patent CN103895219B discloses a tapered roller for making Fresnel lenses, which solves the limitation of lathe size to the manufacturing size of flat molds. A tapered roller mold can be processed by a smaller lathe, and the Fresnel lens with a larger size can be manufactured by the tapered roller mold. The tapered roller itself can be regarded as a superposition of concentric rings with different diameters, which can be used to make a Fresnel lens composed of several regular optical structures. However, this technical solution cannot produce a Fresnel lens formed by a non-concentric optical structure, and the size of the Fresnel lens mold that can be processed is also limited.

Chinese patent application CN108890944A discloses a mold for manufacturing a Fresnel lens and a production method thereof. The mold includes a pressing plate and a base plate at a lower end of the pressing plate. Multiple annular grooves with different diameters are distributed on the base plate, and the adjacent grooves have different depths and inclination angles. The lower end of the pressing plate is provided with a protruding portion that fits with the groove on the base plate; The Fresnel lens annular strip is processed on the surface of small pieces of metal strips by a numerical control machine, and then the small pieces of metal strips are spliced and combined into a substrate blank. Further, the residual quantity reserved on the surface of the blank is removed by a lathe and a cutter, and the Fresnel lens molding template is obtained by grinding with a grinding machine to remove thorns. The actual design and production verify that due to the limitation of the processing size of the existing machine tools, this method can't realize the production of large-size Fresnel lens molds. Large-size Fresnel lens needs to be formed by splicing. The existence of splicing seam seriously affects the performance of Fresnel lens, so it can't be used in electronic display and other situation that require high apparent quality of Fresnel lens.

### SUMMARY

In view of this, an object of the present application is to provide a Fresnel lens mold, which solves the problem that the Fresnel lens with super large size and irregular shape cannot be manufactured in the conventional technology.

To achieve the above object, the following technical solutions are provided in the embodiment of the present application.

A Fresnel lens mold includes stacked strips, where the strip is bendable, and an optical structure, which is the same as a lens structure on a corresponding annular strip of a designed Fresnel lens, is provided at one edge of the strip.

As an embodiment of the present application, the Fresnel lens mold further includes a reference unit, and the strip is stacked on a contour surface of the reference unit based on the reference unit.

As an embodiment of the present application, a contour shape of the reference unit is the same as an annular strip shape of the corresponding area of the Fresnel lens. The strip is stacked on one contour surface of the reference unit according to a position of the respective annular strips in the Fresnel lens and an orientation of the lens structures on the annular strips.

**As** an embodiment of the present application, the reference unit is provided with the same optical structure as the lens structure in the corresponding area of the Fresnel lens. The strip is stacked on an contour surface of the reference unit according to the positions of the respective strips in the Fresnel lens and the orientation of the lens structures on the annular strips.

As an embodiment of the present application, an outer contour shape of the reference unit is in a shape of circle, ellipse, parabola, polygon or part of the these shapes.

As an embodiment of the present application, the reference unit is a reference strip, and the shape of the reference strip is the same as the shape of the outermost annulus of the Fresnel lens. The strip is stacked on an inner side of the reference strip according to the position of the annular strip of the Fresnel lens and the orientation of the lens structures on the annular strip.

As an embodiment of the present application, the reference unit is a reference strip, and the shape of the reference strip is the same as the shape of the innermost annular strip of the Fresnel lens. The strip is stacked on an outer side of the reference strip according to the position of the annular strip of the Fresnel lens and the orientation of the lens structures on the annular strip.

As an embodiment of the present application, the Fresnel lens mold further includes a fixing unit, and the reference unit is arranged on the fixing unit.

A manufacturing method of the Fresnel lens mold is further provided according to the present application, which solves the problem that only annular Fresnel lens molds can be manufactured in the conventional technology.

A method for manufacturing a Fresnel lens mold, including the following steps:
S1, designing a Fresnel lens: designing the annular strip shape and lens structure parameters of Fresnel lens according to the requirements of optical characteristics, disassembling the Fresnel lens into an annular strip to obtain corresponding annular strip parameters, where the annular strip parameters include the structural parameters of each lens on the annular strip;
S2, processing parts: selecting a bendable strip, and processing an optical structure on one edge of the strip which is the same as the lens structure on the corresponding annular strip of the Fresnel lens;
S3, stacking strips: stacking the strips with the optical structures according to a position of the annular strip of the Fresnel lens and an orientation of the lens structure on the annular strip, and manufacturing into a Fresnel lens mold.

As an embodiment of the present application, the strip is stacked by means of adhesive, mechanical fixation or magnetic adsorption.

As an embodiment of the present application, the manufacturing method of the Fresnel lens mold specifically includes the following steps:
S1, designing a Fresnel lens: designing the annular strip shape and lens structure parameters of Fresnel lens according to the requirements of optical characteristics, disassembling the Fresnel lens into a reference unit and an annular strip so as to obtain corresponding reference unit parameters and annular strip parameters;
S2, processing parts: according to the parameters of the reference unit, the corresponding reference unit is processed by turning, milling or grinding; selecting a bendable strip, and processing an optical structure on one edge of the strip which is the same as the lens structure on the corresponding annular strip of the Fresnel lens by turning, milling or grinding according to the annular strip parameters;
S3, stacking strips: fixing the position of the reference unit according to the designed Fresnel lens; stacking the strip with the optical structure on one contour surface of the reference unit according to the position of the annular strip of the Fresnel lens and the orientation of the lens structure on the annular strip so as to make a Fresnel lens mold.

As an embodiment of the present application, a contour shape of the reference unit is the same as an annular strip shape of the corresponding area of the Fresnel lens. The strips are stacked on one contour surface of the reference unit according to the positions of the respective annular strips in the Fresnel lens and the orientation of the lens structures on the annular strips.

As an embodiment of the present application, the reference unit is processed with the same optical structure as the lens structure on the corresponding annular strip of the Fresnel lens. Stacking the strips continuously or in sections on one profile surface of the reference unit according to the position of the annular strip in the Fresnel lens and the orientation of the lens structure on the annular strip.

As an embodiment of the present application, the reference unit is a reference strip, and the shape of the reference strip is the same as the shape of the outermost annular of the Fresnel lens. Stacking the strips continuously or in sections on an inner side of the reference strip according to the position of the annular strip in the Fresnel lens and the orientation of the lens structure on the annular strip.

As an embodiment of the present application, the reference unit is a reference strip, and the shape of the reference strip is the same as the shape of the innermost annular strip of the Fresnel lens. Stacking the strips continuously or in sections on one outer side of the reference strip according to the position of the annular strip in the Fresnel lens and the orientation of the lens structure on the annular strip.

As an embodiment of the present application, the manufacturing method of the Fresnel lens mold specifically includes the following steps:
S1, designing a Fresnel lens: designing the annular strip shape and lens structure parameters of Fresnel lens according to the requirements of optical characteristics, disassembling the designed Fresnel lens into an annular strip so as to obtain corresponding annular strip parameters, where the annular strip parameters include the structural parameters of each lens on the annular strip;
S2, processing parts: selecting a bendable strip, and processing an optical structure on one edge of the strip which is the same as the lens structure on the corresponding annular strip of the Fresnel lens according to the annular strip parameters;
S3, stacking strips: determining a reference unit and taking the reference unit as basis, stacking the strips with the optical structure according to the position of the annular strip of the Fresnel lens and the orientation of the lens structure on the annular strip, and then removing the reference unit so as to obtain a Fresnel lens mold.

A method for manufacturing a Fresnel lens is further provided according to the present application, which solves the problem that large-sized and irregular Fresnel lenses cannot be directly produced in the conventional technology, and the large-sized Fresnel lenses obtained by splicing have splicing seams.

A method for manufacturing a Fresnel lens, the Fresnel lens mold in use includes stacked strip, where the strip is bendable, and an optical structure is provided at one edge of the strip, which is the same as a lens structure on the corresponding annular strip of the designed Fresnel lens. The Fresnel lens is manufactured by means of liquid glue coating and curing or hot-pressing molding, and the liquid glue coating and curing method includes at least one of radiation curing, thermal curing or reaction curing.

Compared with the conventional technology, the beneficial effects achieved by the present application are:

the Fresnel lens mold of the present application includes stacked strips, where the strip is bendable, and an optical structure is provided at one edge of the strip, which is the same as a lens structure on the corresponding annular strip of the designed Fresnel lens; the Fresnel lens mold is not limited by the size of the processing lathe, and the strip is processed according to the designed Fresnel lens, thereby ensuring the processing accuracy of the Fresnel lens mold; according to the manufacturing method of the present application, through the steps of designing the Fresnel lens by optical characteristics, processing parts and stacking the strip, the manufactured Fresnel lens mold completely corresponds to the designed Fresnel lens without a limitation to a specific shape and size. Fresnel lens molds and local Fresnel lens molds with any sizes and non-concentric rings can be manufactured. The process of manufacturing the Fresnel lens by the above Fresnel lens mold is simple, and the prepared Fresnel lens has high precision; In addition, the manufacturing method can be used for manufacturing large-size Fresnel lens, and the obtained large-size Fresnel lens has no spliced seam, thus ensuring the performance of Fresnel lens, and can be used in situations with high requirements on the apparent quality of Fresnel lens such as electronic display.

### BRIEF DESCRIPTION OF THE DRAWINGS

In order to more clearly illustrate technical solutions of the present application, the drawings used in the description of the embodiments are briefly described below. It is apparent that the drawings in the following description show some embodiments of the present application, and other drawings may be obtained by those skilled in the art based on the drawings without any creative efforts.
FIG. 1 is a Fresnel lens with regular optical structure;
FIG. 2 is a Fresnel lens 1 composed of an irregularly shaped optical structure;
FIG. 3 is a Fresnel lens 2 composed of an irregularly shaped optical structure;
FIG. 4 is a schematic view of a Fresnel lens mold manufacturing process;
FIG. 5 is a schematic view of the tooth structure of Fresnel lens structure on the annular strip;
FIG. 6 is a schematic view of an elliptical Fresnel lens mold;
FIG. 7 is a schematic view of a parabolic Fresnel lens mold;
FIG. 8 is a schematic view of a wavy Fresnel lens mold;
FIG. 9 is a schematic cross-sectional view of a circular Fresnel lens mold along line A-A;
FIG. 10 is an exploded view of the designed Fresnel lens;
FIG. 11 is a schematic view of a full circle mold core;
FIG. 12 is a schematic view that the strip is continuously stacked on the full circle mold core to make the Fresnel lens mold;
FIG. 13 is a schematic view that the strip is stacked on the full circle mold core in sections to make the Fresnel lens mold;
FIG. 14 is the second schematic view of the full circle mold core;
FIG. 15 is a second schematic view that the strip is continuously stacked on the full circle mold core to make the Fresnel lens mold;
FIG. 16 is a second schematic view that the strip is stacked on the full circle mold core in sections to make the Fresnel lens mold;
FIG. 17 is a schematic view of a semicircular mold core;
FIG. 18 is the schematic view that the strip is stacked on the semicircular mold core to make the Fresnel lens mold;
FIG. 19 is the second schematic view of the semicircular mold core;
FIG. 20 is the second schematic view of a Fresnel lens mold made by stacking strips on a semicircular mold core;
FIG. 21 is a schematic view of a partial circular mold core;
FIG. 22 is the schematic view that the strip is stacked on the partial circular mold core to make the Fresnel lens mold;
FIG. 23 is the second schematic view of a partial circular mold core;
FIG. 24 is the second schematic view of a Fresnel lens mold made by stacking strips on a partial circular mold core;
FIG. 25 is a schematic view of an elliptical mold core;
FIG. 26 is a schematic view that the strip is continuously stacked on the elliptical mold core to make the Fresnel lens mold;
FIG. 27 is a schematic view of a Fresnel lens mold made by stacking strips on an elliptical mold core in sections;
FIG. 28 is a second schematic view of an elliptical mold core;
FIG. 29 is a schematic view that the strip is continuously stacked on the elliptical mold core to make the Fresnel lens mold;
FIG. 30 is a schematic view of a Fresnel lens mold made by stacking strips on an elliptical mold core in sections;
FIG. 31 is a schematic view of a semi-elliptical mold core;
FIG. 32 is the schematic view that the strip is stacked on the semi-elliptical mold core to make the Fresnel lens mold;
FIG. 33 is a second schematic view of a semi-elliptical mold core;
FIG. 34 is the second schematic view of a Fresnel lens mold made by stacking strips on a semi-elliptical mold core;
FIG. 35 is a schematic view of a parabolic mold core;
FIG. 36 is a schematic view of a Fresnel lens mold made by stacking strips on a parabolic mold core;
FIG. 37 is the second schematic view of the parabolic mold core;
FIG. 38 is the second schematic view of a Fresnel lens mold made by stacking strips on a parabolic mold core;
FIG. 39 is the first schematic view of a Fresnel lens mold made by shaft rotation;
FIG. 40 is the second schematic view of a Fresnel lens mold made by shaft rotation;
FIG. 41 is a schematic view of the continuous stacking of strips on a mold core to make a Fresnel lens mold containing a flat plate;
FIG. 42 is the schematic view that the strip is stacked on the mold core in sections to make the Fresnel lens mold containing flat plate;
FIG. 43 is the first schematic view of manufacturing Fresnel lens mold with flat plate by shaft rotation;
FIG. 44 is the second schematic view of manufacturing Fresnel lens mold with flat plate by shaft rotation;
FIG. 45 is a schematic view of the continuous stacking of strips on the inside of the reference strip to make a Fresnel lens mold;
FIG. 46 is a schematic view of the required Fresnel lens optical film cut out on the base film;

Reference numbers in the drawings are listed as follows: 100 reference unit; 101 mold core; 102 reference strip; 200 annular strip; 201 right-angled triangular tooth structure; 202 non-right-angled triangular tooth structure; 203 sector-shaped tooth structure; 204 prismatic tooth structure; 300 strip; 400 flat plate; 500 rotating shaft; 600 mold core shaft; 700 rubber pressing roller; 800 Fresnel lens optical film; the direction of the arrow represents the direction of rotation.

Through the above-mentioned drawings, specific embodiments of the present application have been shown, which are described in more detail hereinafter. These drawings and text descriptions are not intended to limit the scope of the inventive concept in any way, but to illustrate the concept of the present disclosure to those skilled in the art by referring to specific embodiments.

### DETAILED DESCRIPTION OF THE EMBODIMENTS

In order to make objectives, technical solutions and advantages of the embodiments of the present disclosure clearer, the technical solutions in the embodiments of the present disclosure are described clearly and completely in conjunction with the drawings in the embodiments of the disclosure hereinafter. It is apparent that the described embodiments are only some rather than all embodiments of the present disclosure. Any other embodiments obtained by those skilled in the art based on the embodiments in the present disclosure without any creative effort shall fall within the protection scope of the present disclosure.

In the description of the present application, it should be noted that, unless otherwise specified and limited, "setting" and "fixing" should be understood in a broad sense, for example, it can be directly and fixedly connected, or indirectly connected through an intermediate medium, and can be the internal communication of two elements or the interaction between two elements. For those skilled in the art, the specific meaning of the above terms in the present application may be understood in the light of specific circumstances.

In the description of the present application, "several" means two or more, unless it is precisely and specifically specified otherwise.

In addition, the terms "include" and any other variants are intended to cover the non-exhaust exclusive inclusion. For example, a process, a method, a system, a product, or a device that includes a series of steps or units is not , necessarily limited to those expressly listed steps or units, but may include other steps or units not expressly listed or inherent to such process, such method, such product, or such device.

### First Embodiment

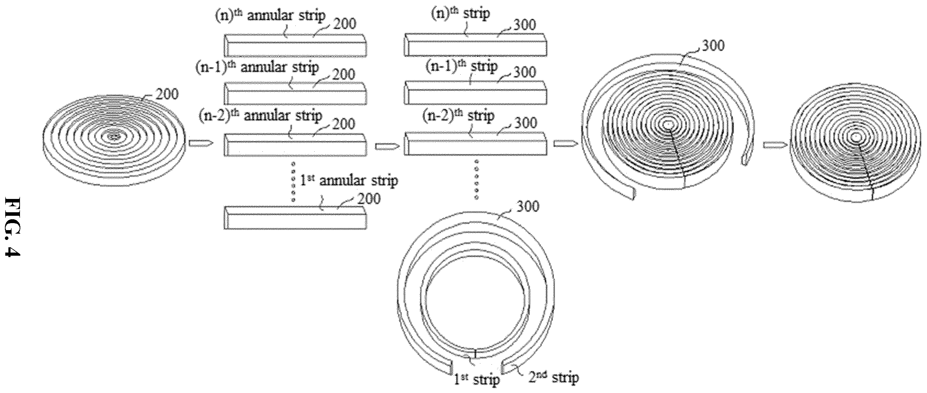

A Fresnel lens mold formed by lamination of bendable strips, and an optical structure is provided at one edge of the strip, which is the same as a lens structure of the designed Fresnel lens on the corresponding annular strip. The flow chart of Fresnel lens mold formation is shown in FIG. 4, and the specific description is as follows:
S1, according to the requirements of optical characteristics, design the shape of the Fresnel lens annular strip and lens structure parameters, and disassemble the Fresnel lens into several annular strips 200. Starting from the innermost annular strip of Fresnel lens is the first annular strip, the second annular strip, the third annular strip, the fourth annular strip, the (n-1)^{th} annular strip and the (n)^{th} annular strip in sequence, and the corresponding annular strip parameters are obtained, where the annular strip parameters include the lens structure parameters on the annular strip;
S2, selecting a bendable strip 300, and processing an optical structure on one edge of the strip, which is the same as the lens structure on the corresponding annular strip of the Fresnel lens according to the structural parameters of each lens on the annular strip, so as to obtain the first strip, the second strip, the third strip, the fourth strip, the (n-1)^{th} strip and the (n)^{th} strip which correspond to the annular strip one by one. Herein, the first strip, the second strip, the third strip, the fourth strip, the (n-1)^{th} strip and the (n)^{th} strip can be numbered correspondingly, so as to simplify the subsequent process of stacking several strips;
S3, according to the position of each annular strip of the Fresnel lens and the orientation of each lens structure on the annular strip, sequentially stacking the strips processed with optical structures according to the numbering sequence, and manufacturing a Fresnel lens mold.

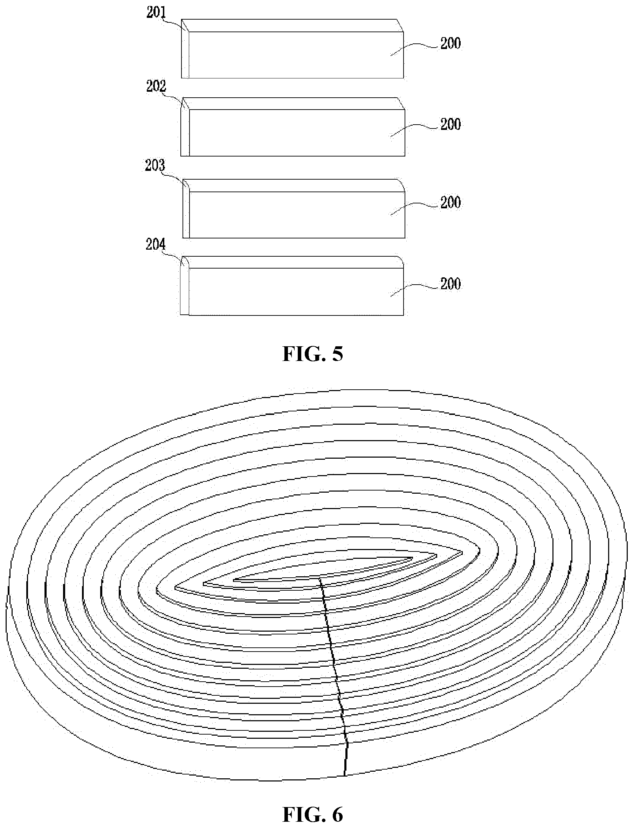

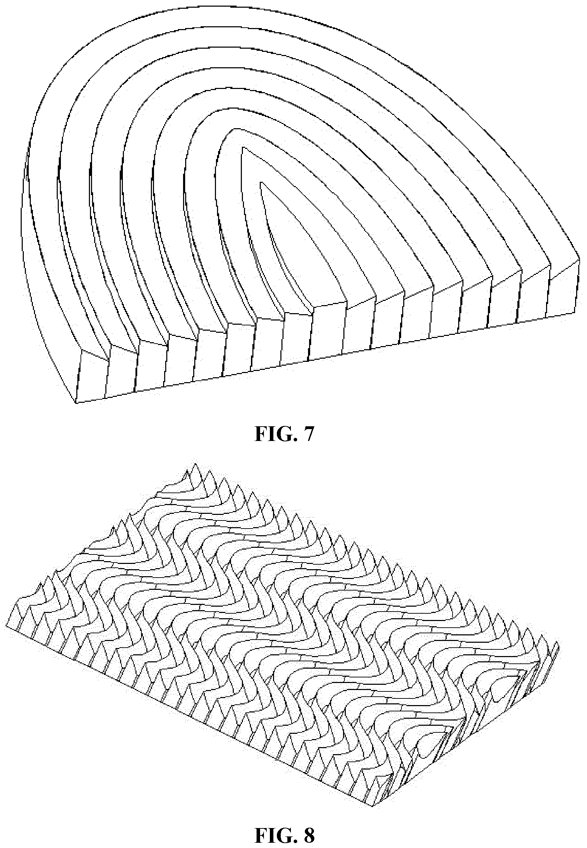

With a bendable strip, an optical structure with the same structural parameters as the lenses on the Fresnel lens annular strip is processed on one edge of the strip, and then is stacked layer by layer to make a Fresnel lens mold. As shown in FIG. 5, the lens structure on each annular strip of the Fresnel lens can be a right-angled triangular tooth structure 201, a non-right-angled triangular tooth structure 202, a sector-shaped tooth structure 203, or a prismatic tooth structure 204; according to the lens structure on each annular strip of the Fresnel lens, the optical structure of the corresponding lens structure is processed on one edge of the strip. The bendable strips can be stacked into Fresnel lens molds with a corresponding shape according to the designed Fresnel lens, for example, the elliptical Fresnel lens mold shown in FIG. 6, the parabolic Fresnel lens mold shown in FIG. 7, and the wavy Fresnel lens mold shown in FIG. 8. In addition, Fresnel lens molds of any size can be fabricated by controlling the number of stacked bendable strips. Therefore, the preparation method of the Fresnel lens mold of the embodiment of the present application is not limited by the processing size of the ultra-precision machine tool, and Fresnel lens molds of various shapes and sizes can be produced according to requirements.

The strip is a flexible, crimpable and high hardness material, which is made by grinding, polishing, etc. The strip in the embodiment of the present application is preferably a metal strip. According to the lens structure parameters on the annular strip, milling, grinding or polishing is used to process one edge of the strip with the same optical structure as the lens structure on the corresponding annular strip of the Fresnel lens. The strips can be stacked and fixed by gluing, snapping, riveting, or expansion locking. According to the designed annular parameters of Fresnel lens and the structural parameters of each lens on the annular strip, one edge of the strip is processed so as to manufacture an optical structure with a corresponding cross-sectional shape. The cross-sectional shape of the optical structure can be triangle of any type, sector, circle, bow, parabola, ellipse, trapezoid or frustum composed of multiple line segments.

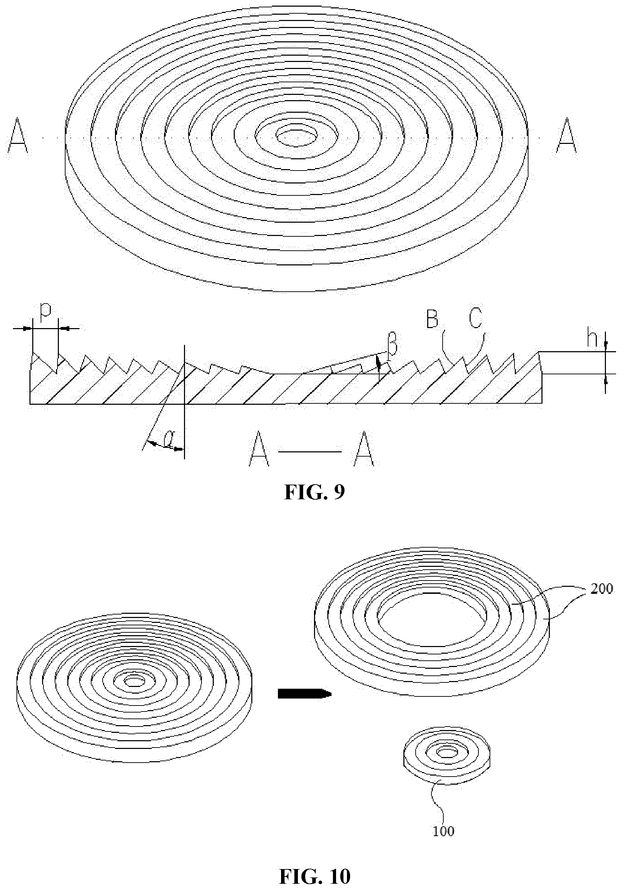

According to the requirements of optical characteristics, the parameters of the designed Fresnel lens include the overall shape and size of the Fresnel lens, the cross-sectional shape of each annular strip lens structure of the Fresnel lens and the calculated cross-sectional shape parameters. Taking a circular Fresnel lens as an example, as shown in FIG. 9, the A-A cross-sectional parameters include the distance between the tooth profiles of adjacent annular strip lens structures, namely the tooth pitch P, the tooth profile height H of each annular strip lens structure of Fresnel lens, the angle between the working surface B and the side perpendicular to the tooth profile of Fresnel lens, namely the draft angle α, and the angle between the working surface B and the side away from the tooth profile of Fresnel lens, which is the working angle β, and the interference surface C.

When the tooth pitch P of adjacent annular strip lens structures of the designed Fresnel lens and the tooth height h of each annular strip lens structure are both same, according to the tooth pitch P of the designed Fresnel lens structure, the thickness of the bendable strip is selected to be the same as the tooth pitch P, that is, when the tooth pitch P and tooth height h of the designed Fresnel lens structure are both 0.15mm, a bendable strip with a thickness of 0.15mm is selected; according to the tooth height h of the Fresnel lens designed theoretically, the width of the bendable strip is selected to be ≥ the tooth height h of the Fresnel lens. In case of considering the stability of the bendable strips when they are stacked, a suitable contact surface is required, preferably the width of the bendable strips > the tooth height h of the Fresnel lens.

When the tooth pitch P of adjacent annular strip lens structures of the designed Fresnel lens is different, but the tooth height h of each annular strip lens structure is the same, the thickness of the corresponding bendable strip needs to be selected according to the tooth pitch P, and the width of the bendable strip is the same.

When the tooth pitch P of adjacent annular strip lens structures of the designed Fresnel lens is the same, but the tooth height h of each annular strip lens structure is different, the thickness of the bendable strip is selected to be the same, the width of the strip can be selected to be greater than or equal to the maximum tooth pitch P of the lens structure of the annular strip, and the width of the annular strip can also be selected according to the corresponding tooth height.

When the tooth pitch P of the adjacent annular strip lens structures of the designed Fresnel lens is different, and the tooth height h of each annular strip lens structure is also different, it is necessary to select the thickness of the bendable strip corresponding to the tooth pitch P, the width of the strip can be selected to be greater than or equal to the maximum tooth pitch P of the lens structure of the annular strip, and the width of the annular strip can also be selected according to the corresponding tooth height.

### Second Embodiment

A Fresnel lens mold including a reference unit and a stacked strip, the strip being bendable, and an optical structure is provided at one edge of the strip, which is the same as a lens structure of the designed Fresnel lens on the corresponding annular strip, a contour shape of the reference unit is the same as that of an annular strip of the corresponding area of the Fresnel lens. The strips are stacked on one contour surface of the reference unit according to the positions of the respective annular strips in the Fresnel lens and the orientation of the lens structures on the annular strips. The specific manufacturing method of the Fresnel lens mold is as follows:
S1, designing the annular strip shape and lens structure parameters of Fresnel lens according to the requirements of optical characteristics, and disassemble the Fresnel lens into a reference unit 100 and an annular strip 200 through computer simulation technology so as to obtain the corresponding reference unit parameters and annular strip parameters, the annular strip parameters include the structural parameters of each lens on the annular strip, and the specific disassembling process is shown in FIG. 10;
S2, according to the parameters of the reference unit, manufacturing the raw materials of the reference unit into corresponding reference units by turning, milling or grinding; selecting a bendable strip, and processing an optical structure on one edge of the strip which is the same as the lens structure on the corresponding annular strip of the Fresnel lens by turning, milling or grinding according to the annular strip parameters;
S3, fixing the position of the reference unit according to the designed Fresnel lens; stacking the strip with the optical structure on one contour surface of the reference unit according to the position of the annular strip of the Fresnel lens and the orientation of the lens structure on the annular strip so as to make a Fresnel lens mold.

The raw material of the reference unit is preferably a material with higher hardness, so as to prolong the service life of the Fresnel lens mold. The raw materials are generally selected from metals, ceramics and polymer materials. The metal materials include but are not limited to stainless steel, aluminum alloys, aluminum-magnesium alloys and copper alloys; the ceramics include but are not limited to aluminum oxide ceramics; the polymer materials include but are not limited to carbon fiber reinforced plates and polytetrafluoroethylene. By turning, milling or grinding the raw materials of the reference unit, the designed reference unit parameters of Fresnel lens disassembly are processed to form the reference unit.

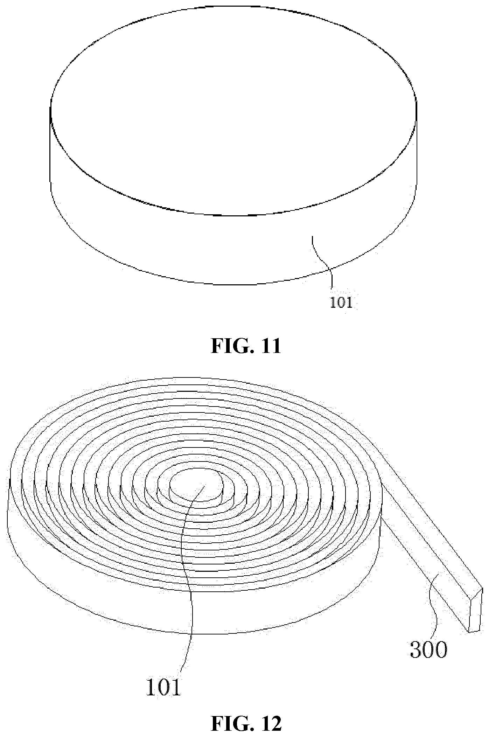

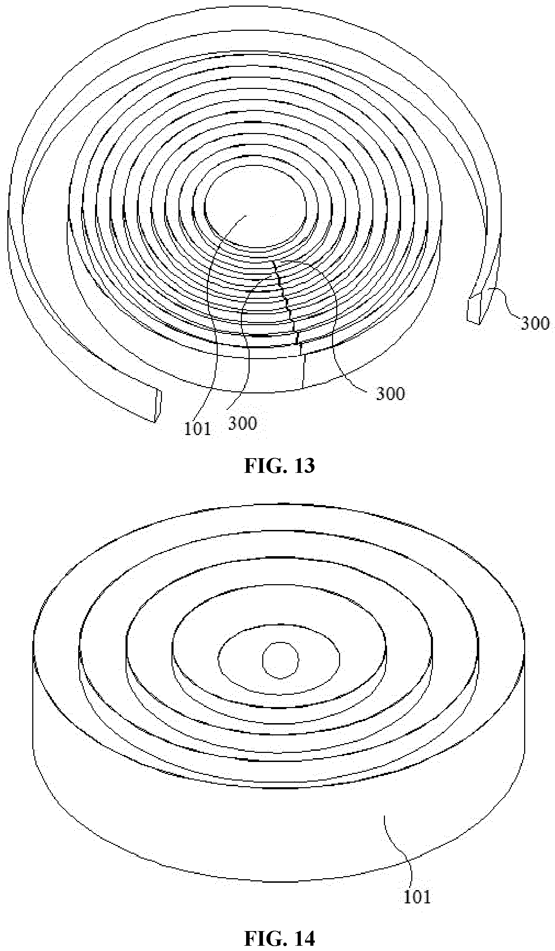

As an alternative of this embodiment, according to the theoretical design of the Fresnel lens, a cylinder with a certain size and positioned in the center is taken as the reference unit. Taking this reference unit as a reference, hereinafter, this reference unit with a cylindrical surface with a certain shape is referred as the mold core 101. As shown in FIG. 11, the contour shape of the processed mold core 101 is the same as the annular strip shape of the corresponding area of the designed Fresnel lens. As shown in FIG. 12, the strip 300, formed as a whole, is continuously stacked on the contour surface of the mold core 101 according to the position of each annular strip in the Fresnel lens and the orientation of the lens structure on the annular strip so as to form a Fresnel lens mold; as shown in FIG. 13, the strip 300 is formed with several sections, which are sequentially stacked on the contour surface of the mold core 101 according to the position of each annular strip in the Fresnel lens and the orientation of the lens structure on the annular strip so as to form a Fresnel lens mold.

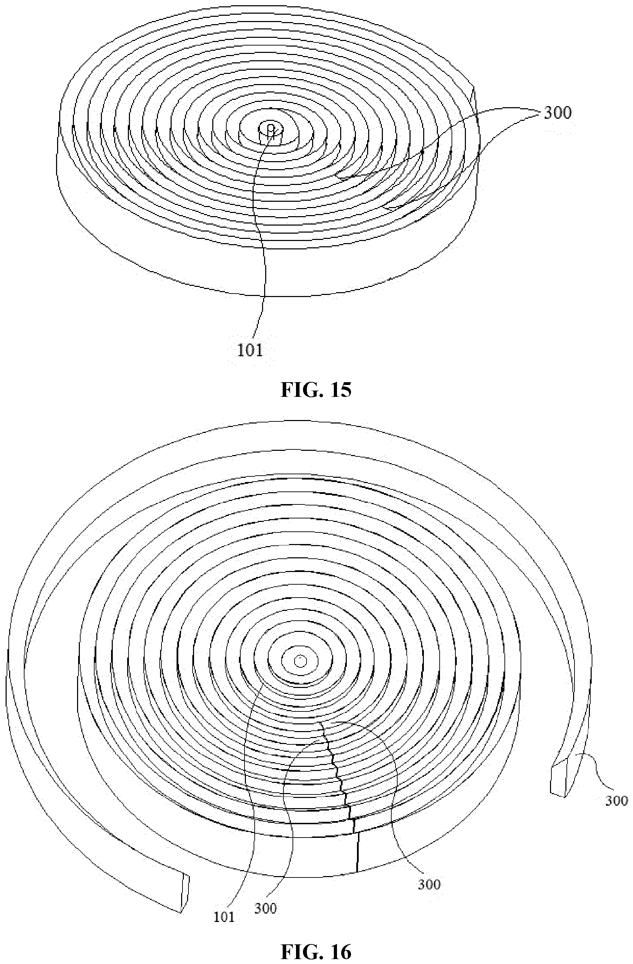

As an alternative of this embodiment, according to the theoretical design of the Fresnel lens, a cylinder with a certain size and positioned in the center, that is, the mold core 101, is taken as the reference unit. As shown in FIG. 14, the contour shape of the processed mold core 101 is the same as the shape of the designed annular strip of the corresponding area of the Fresnel lens, and is provided with the same optical structure as the lens structure in the corresponding area of the Fresnel lens. According to the corresponding area parameters of the designed Fresnel lens, as shown in FIG. 15 , the strip 300, formed as a whole, is continuously stacked on the contour surface of the mold core 101 according to the position of each annular strip in the Fresnel lens and the orientation of the lens structure on the annular strip so as to form a Fresnel lens mold. As shown in FIG. 16, the strip 300 is formed into several sections, which are sequentially stacked on the contour surface of the mold core 101 according to the position of each annular strip in the Fresnel lens and the orientation of the lens structure on the annular strip so as to form a Fresnel lens mold.

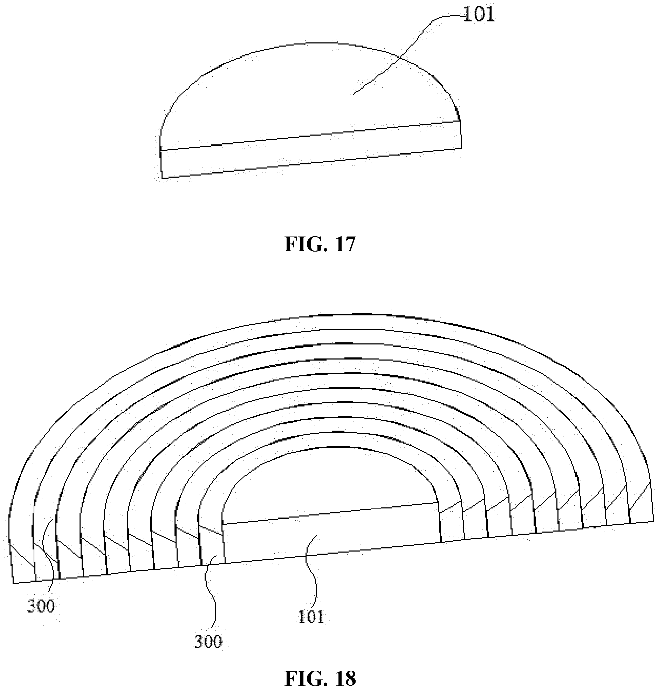

As an alternative of this embodiment, according to the theoretical design of Fresnel lens, a half of a cylinder with a certain size, which is positioned in the center and cut along the axial direction, is taken as a reference unit, that is, the mold core 101, as shown in FIG. 17, the contour shape of the processed mold core 101 is the same as the shape of the designed annular strip of the corresponding area of the Fresnel lens. As shown in FIG. 18, the strip 300 is formed into several sections, which are sequentially stacked on the contour surface of the mold core 101 according to the position of each annular strip in the Fresnel lens and the orientation of the lens structure on the annular strip so as to form a Fresnel lens mold.

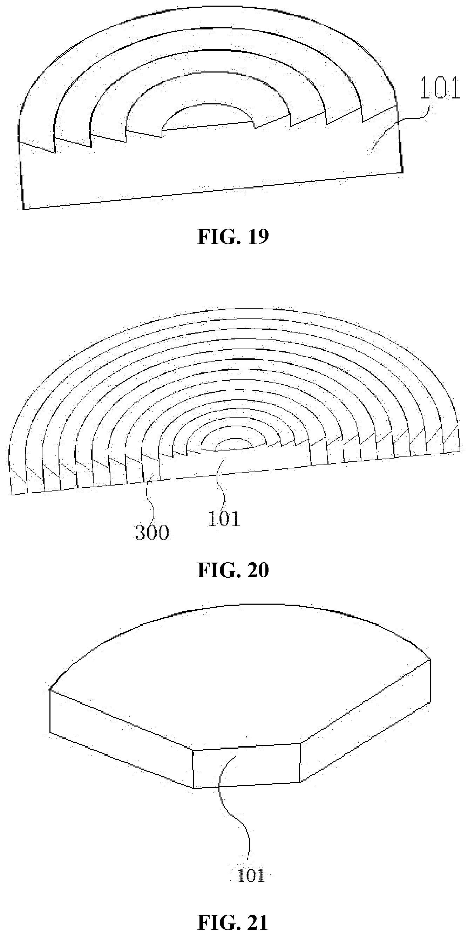

As an alternative of this embodiment, according to the theoretical design of Fresnel lens, a half of a cylinder with a certain size, which is positioned in the center and cut from the axial direction, is taken as a reference unit, that is, the mold core 101, as shown in FIG. 19, the contour shape of the processed mold core 101 is the same as the shape of the designed annular strip of the corresponding area of the Fresnel lens, and is provided with the same optical structure as the lens structure in the corresponding area of the Fresnel lens. As shown in FIG. 20, the strip 300 is formed into several sections, which are sequentially stacked on the contour surface of the mold core 101 according to the position of each annular strip in the Fresnel lens and the orientation of the lens structure on the annular strip so as to form a Fresnel lens mold.

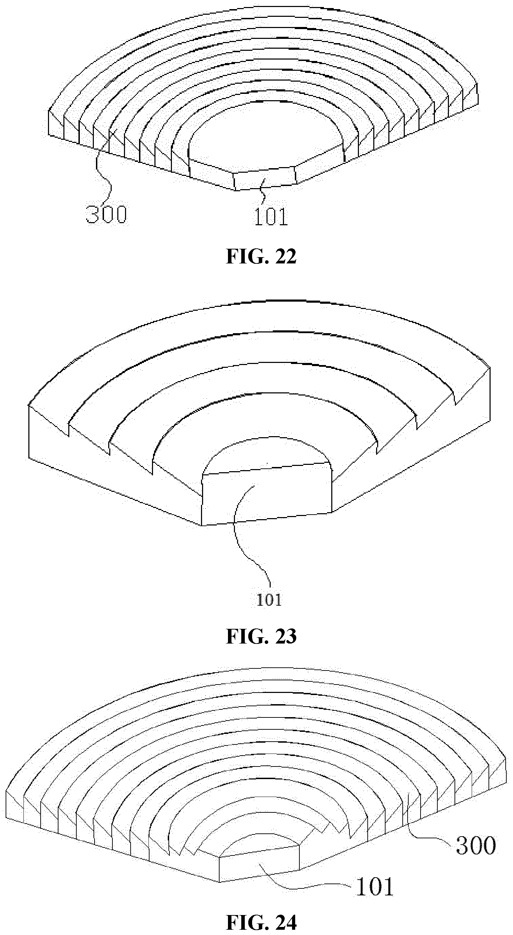

As an alternative of this embodiment, according to the Fresnel lens theory design, a part of a cylinder (less than half of the cylinder) with a certain size, which is positioned in the center and axially cut off, is taken as a reference unit, that is, the mold core 101, as shown in FIG. 21, the contour shape of the processed mold core 101 is the same as the shape of the designed annular strip of the corresponding area of the Fresnel lens. As shown in FIG. 22, the strip 300 is formed into several sections, which are sequentially stacked on the contour surface of the mold core 101 according to the position of each annular strip in the Fresnel lens and the orientation of the lens structure on the annular strip so as to form a Fresnel lens mold.

As an alternative of this embodiment, according to the Fresnel lens theory design, a part of a cylinder (less than half of the cylinder) with a certain size, which is positioned in the center and axially cut off, is taken as a reference unit, that is, the mold core 101. As shown in FIG. 23, the contour shape of the processed mold core 101 is the same as the shape of the designed annular strip of the corresponding area of the Fresnel lens, and is provided with the same optical structure as the lens structure in the corresponding area of the Fresnel lens. As shown in FIG. 24, the strip 300 is formed into several sections, which are sequentially stacked on the contour surface of the mold core 101 according to the position of each annular strip in the Fresnel lens and the orientation of the lens structure on the annular strip so as to form a Fresnel lens mold.

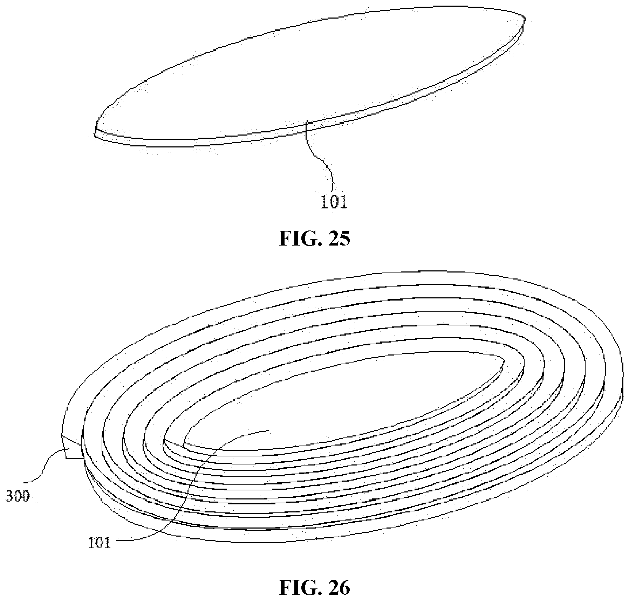

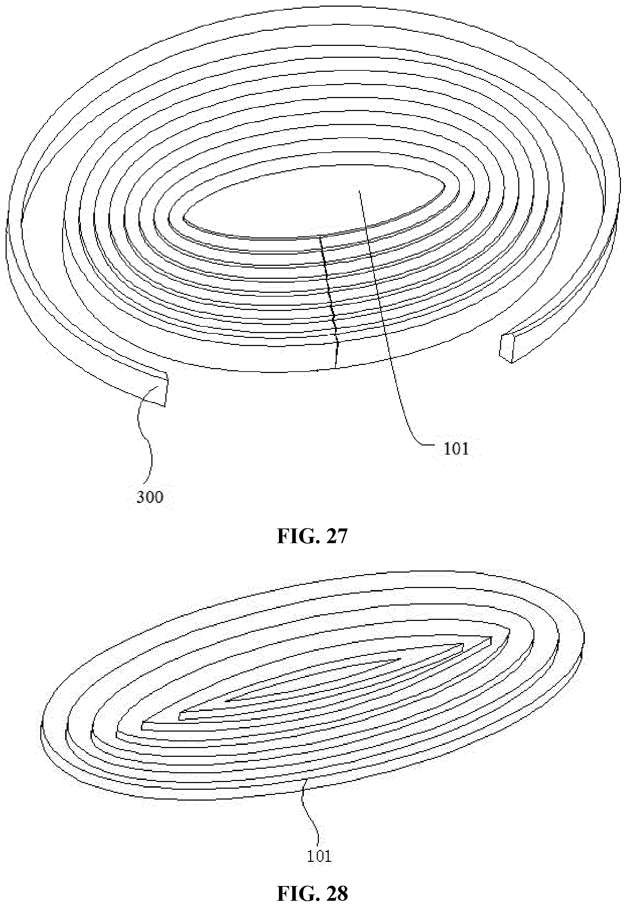

As an alternative of this embodiment, according to the theoretical design of the Fresnel lens, an elliptical cylinder with a certain size and positioned in the center is taken as the reference unit, that is, the mold core 101, as shown in FIG. 25, the contour shape of the processed mold core 101 is the same as the shape of the designed annular strip of the corresponding area of the Fresnel lens. As shown in FIG. 26, the strip 300, formed as a whole, is continuously stacked on the contour surface of the mold core 101 according to the position of each annular strip in the Fresnel lens and the orientation of the lens structure on the annular strip so as to form a Fresnel lens mold. As shown in FIG. 27, the strip 300 is formed into several sections, which are sequentially stacked on the contour surface of the mold core 101 according to the position of each annular strip in the Fresnel lens and the orientation of the lens structure on the annular strip so as to form a Fresnel lens mold.

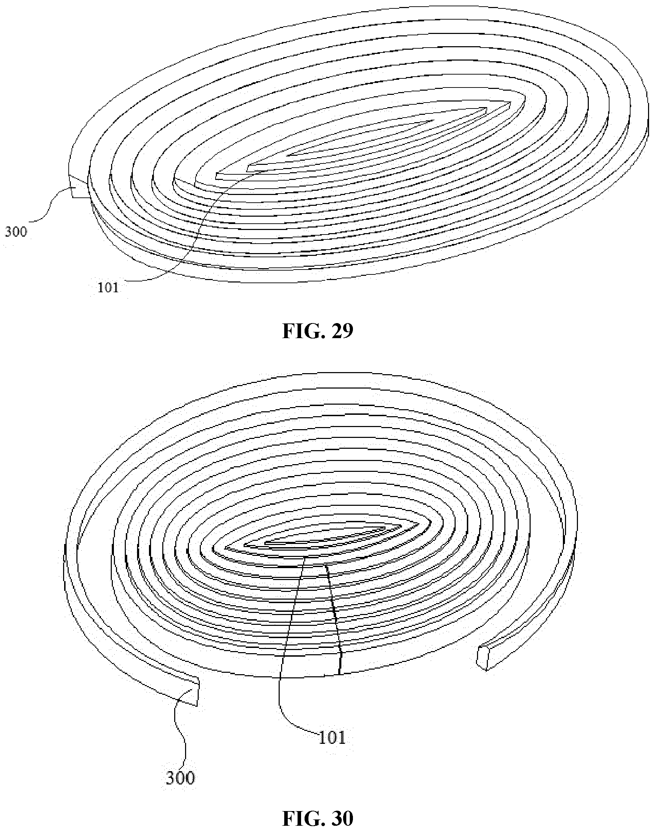

As an alternative of this embodiment, according to the theoretical design of the Fresnel lens, an elliptical cylinder with a certain size and positioned in the center is taken as the reference unit, that is, the mold core 101, as shown in FIG. 28, the contour shape of the processed mold core 101 is the same as the shape of the designed annular strip of the corresponding area of the Fresnel lens, and is provided with the same optical structure as the lens structure in the corresponding area of the Fresnel lens. As shown in FIG. 29, the strip 300, formed as a whole, is continuously stacked on the contour surface of the mold core 101 according to the position of each annular strip in the Fresnel lens and the orientation of the lens structure on the annular strip so as to form a Fresnel lens mold. As shown in FIG. 30, the strip 300 is formed into several sections, which are sequentially stacked on the contour surface of the mold core 101 according to the position of each annular strip in the Fresnel lens and the orientation of the lens structure on the annular strip so as to form a Fresnel lens mold.

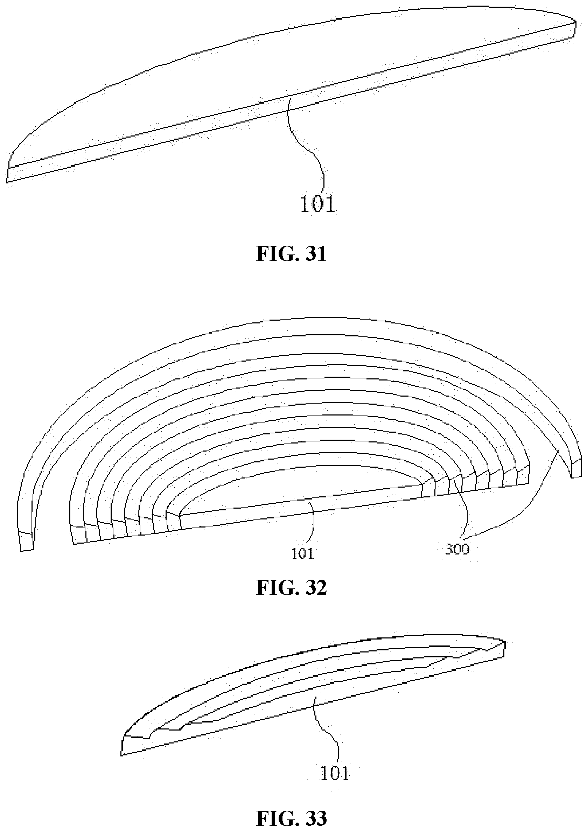

As an alternative of this embodiment, according to the Fresnel lens theory design, a half of an elliptical cylinder with a certain size, which is positioned in the center and cut along the axial direction, is taken as a reference unit, that is, the mold core 101, as shown in FIG. 31, the contour shape of the processed mold core 101 is the same as the shape of the designed annular strip of the corresponding area of the Fresnel lens. As shown in FIG. 32, the strip 300 is formed into several sections, which are sequentially stacked on the contour surface of the mold core 101 according to the position of each annular strip in the Fresnel lens and the orientation of the lens structure on the annular strip so as to form a Fresnel lens mold.

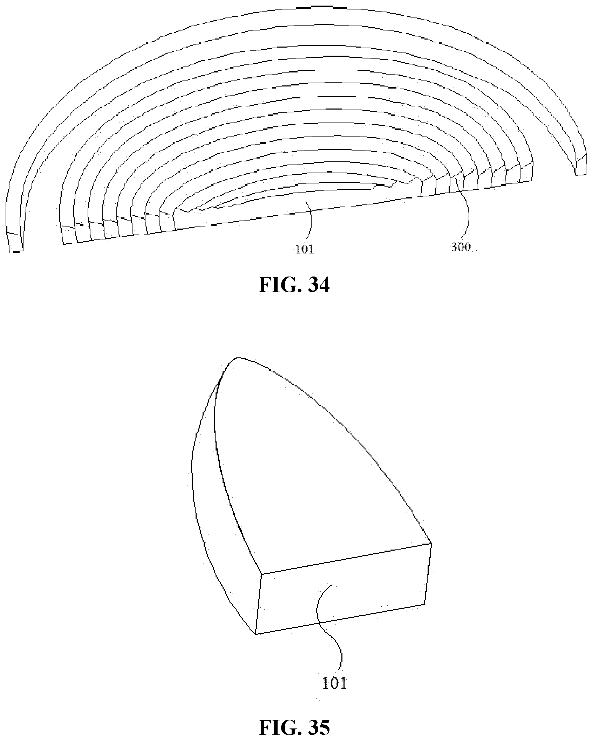

As an alternative of this embodiment, according to the theoretical design of Fresnel lens, a half of an ellipse with a certain size, which is positioned in the center, is taken as the reference unit, that is, the mold core 101, as shown in FIG. 33, the contour shape of the processed mold core 101 is the same as the shape of the designed annular strip of the corresponding area of the Fresnel lens, and is provided with the same optical structure as the lens structure in the corresponding area of the Fresnel lens. As shown in FIG. 34, the strip 300 is formed into several sections, which are sequentially stacked on the contour surface of the mold core 101 according to the position of each annular strip in the Fresnel lens and the orientation of the lens structure on the annular strip so as to form a Fresnel lens mold.

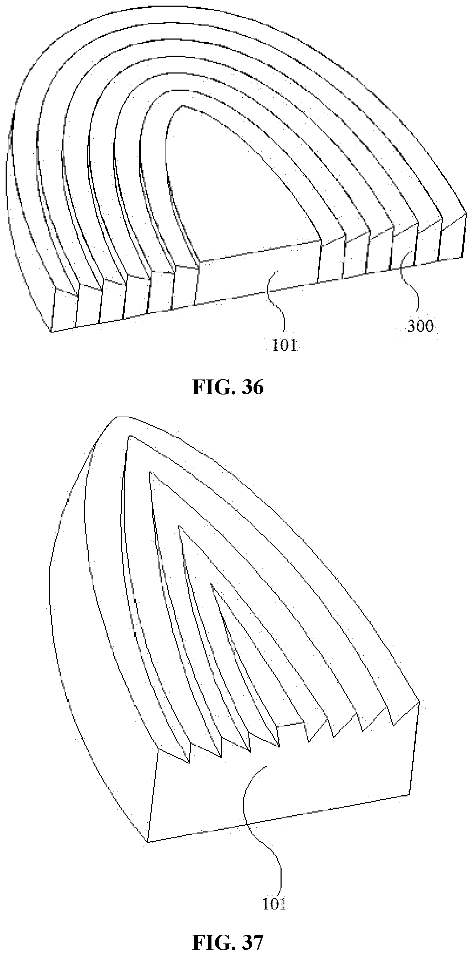

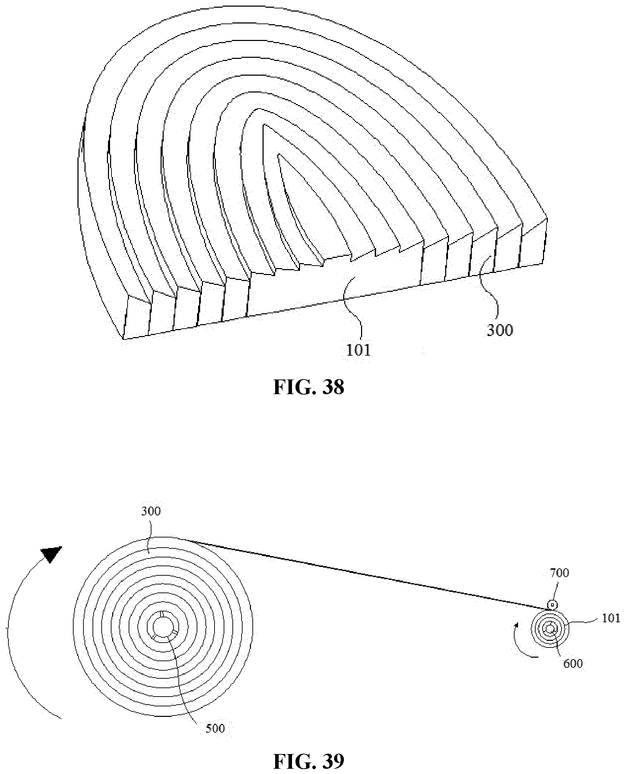

As an alternative of this embodiment, according to the theoretical design of Fresnel lens, a parabolic cylinder with a certain center size and positioned in the center is taken as the reference unit, that is, the mold core 101, as shown in FIG. 35, the contour shape of the processed mold core 101 is the same as the shape of the designed annular strip of the corresponding area of the Fresnel lens. As shown in FIG. 36, the strip 300 is formed into several sections, which are sequentially stacked on the contour surface of the mold core 101 according to the position of each annular strip in the Fresnel lens and the orientation of the lens structure on the annular strip so as to form a Fresnel lens mold. As an alternative of this embodiment, according to the theoretical design of Fresnel lens, a parabola with a certain center size and positioned in the center is taken as the reference unit, that is, the mold core 101, as shown in FIG. 37, the contour shape of the processed mold core 101 is the same as the shape of the designed annular strip of the corresponding area of the Fresnel lens, and is provided with the same optical structure as the lens structure in the corresponding area of the Fresnel lens. As shown in FIG. 38, the strip 300 is formed into several sections, which are sequentially stacked on the contour surface of the mold core 101 according to the position of each annular strip in the Fresnel lens and the orientation of the lens structure on the annular strip so as to form a Fresnel lens mold.

In the whole process for manufacturing the Fresnel lens mold, except the reference unit (i.e., the mold core 101), the strips are stacked on the surface of the mold core 101, and the size of the Fresnel lens mold is continuously increased by superposition, so that the size of the Fresnel lens mold will be not limited; the corresponding reference unit (i.e., the mold core 101 ) is manufactured according to the designed reference unit (i.e., the mold core 101 ) parameters, and the shape of the reference unit can be designed and processed according to any designed Fresnel lens parameters. According to the design parameters of the annular strip, a corresponding optical structure is arranged on the strip, and then a corresponding Fresnel lens mold and a partial Fresnel lens mold are formed by stacking. Fresnel lens molds and partial Fresnel lens molds of any size and concentric annular band can be manufactured without a limitation on shape and size, and the Fresnel lens mold manufactured by the manufacturing method has high structural accuracy and long service life.

### Third Embodiment

On the basis of the second embodiment, the principle of shaft rotation is introduced in the process of stacking the strips, so that the whole process of making the Fresnel lens mold is more intelligent and automated.

As an alternative of this embodiment, when the strip 300 is formed as a whole, as shown in FIG. 39, the mold core 101 is clamed on the mold core shaft 600, the strip 300 is wounded and clamped on the rotating shaft 500, and one end of the bendable strip 300 is fixed on the mold core shaft 600 with traction. Herein, said end of the strip 300 is pressed by a rubber pressing roller 700 , which is used to assist the lamination of the strip 300 and press the strip 300. When rotating the mold core shaft 600, the bendable strip 300 is tightly stacked on the outer contour of the mold core 101, the lamination direction of the bendable strip 300 should ensure that the orientation of the optical structure on the strip 300 is the same as the orientation of the lens structure on the mold core 101, so as to produce a Fresnel lens mold that meets the design requirements. The direction of the arrow represents the rotation direction of the rotating shaft 500 and the mold core shaft 600. Both the mold core shaft 600 and the rotating shaft 500 are rotatable under control, which can be manually rotated by manpower, or the rotating force can be provided by other power, such as a motor. The orientation of the mold core shaft 600 and the rotating shaft 500 can be horizontal or vertical, and it is only necessary to keep the mold core 101 and the wounded bendable strip 300 in the same plane.

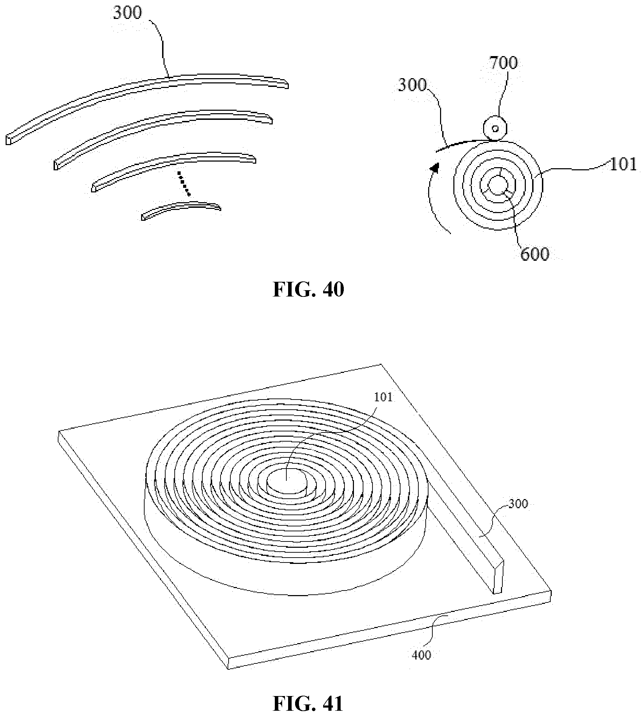

As an alternative of this embodiment, when the strip 300 is formed into several sections, as shown in FIG. 40, the mold core 101 is clamped on the mold core shaft 600, and the sectional strips 300 with optical structures are arranged in order according to the positions on the theoretically designed Fresnel lens. First, fix the front end of the strip 300 closest to the mold core 101 on the mold core 101, the end of the strip 300 is pressed with a rubber pressing roller 700 , which is used to assist the lamination of the strip 300 and press the strip 300; rotate the mold core shaft 600, stack the strip 300 on the outer contour of the mold core 101, fix the end of this section of strip, and stack the strips in sequence for fixing, so as to manufacture the Fresnel lens mold that meets the design requirements. The direction of the arrow represents the rotation direction of the mold core shaft 600; the mold core shaft 600 is rotatable under control, and can be manually rotated by manpower, or can be rotated by other power, such as a motor and the like.

### Fourth Embodiment

A Fresnel lens mold, on the basis of the second embodiment, further including a fixing unit, the mold core is arranged on the fixing unit, and the specific manufacturing process is as follows:
S1, designing the annular strip shape and lens structure parameters of Fresnel lens according to the requirements of optical characteristics, disassembling the Fresnel lens into the mold core and the annular strip through the computer simulation technology, and obtaining the corresponding parameters of the mold core and the annular strip. The annular strip parameters include the structural parameters of each lens on the annular strip;
S2, according to the mold core parameters, processing the corresponding mold core by turning, milling or grinding; selecting a bendable strip, and processing an optical structure on one edge of the strip which is the same as the lens structure on the corresponding annular strip of the Fresnel lens by turning, milling or grinding according to the strip parameters;
S3, fixing the mold core on the fixing unit according to the designed Fresnel lens parameters; stacking the strip with the optical structure on one contour surface of the mold core according to the position of the annular strip of the Fresnel lens and the orientation of the lens structure on the annular strip so as to make a Fresnel lens mold that meets the design requirements.

As an alternative of this embodiment, the fixing unit is a flat plate. The flat plate can be a metal flat plate or a non-metallic flat plate, preferably a flat plate with higher hardness. The flat plate is generally made of metal, ceramic and polymer materials. The metal materials include but are not limited to stainless steel, aluminum alloys, aluminum-magnesium alloys and copper alloys; the ceramics materials include but are not limited to aluminum oxide ceramics; the polymer materials include but are not limited to carbon fiber reinforced plates and polytetrafluoroethylene. The use of the flat plate facilitates of fixing to the mold core, which makes the fabrication of the Fresnel lens mold easier to operate.

As an alternative of this embodiment, as shown in FIG. 41, the mold core 101 is fixed on the flat plate 400, and the annular strip 300, formed as a whole, is continuously stacked on the contour surface of the mold core 101 according to the position of each annular strip in the Fresnel lens and the orientation of the lens structure on the annular strip so as to form a Fresnel lens mold.

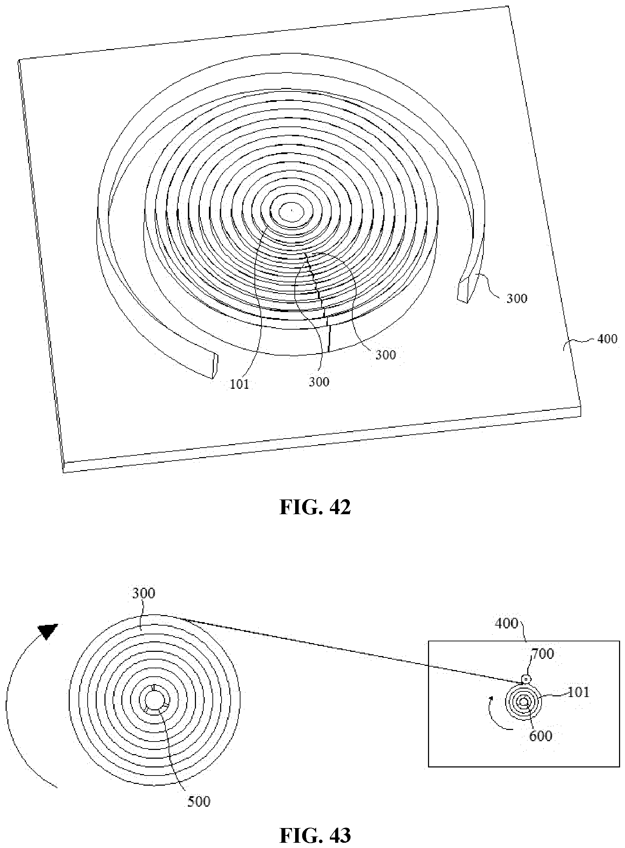

As an alternative of this embodiment, as shown in FIG. 42, the mold core 101 is fixed on the flat plate 400, and the annular strip 300 is formed into several segments, which are sequentially stacked on the contour surface of the mold core 101 according to the position of each annular strip in the Fresnel lens and the orientation of the lens structure on the annular strip so as to form a Fresnel lens mold.

### Fifth Embodiment

On the basis of the fourth embodiment, the principle of shaft rotation is introduced in the process of stacking the strips, so that the whole process of making the Fresnel lens mold is more intelligent and automated.

As an alternative of this embodiment, when the strip 300 is formed as a whole, as shown in FIG. 43, the mold core 101 is fixed on the flat plate 400, then the flat plate 400 fixed with the mold core 101 is clamped on the mold core shaft 600, the strip 300 is wounded and clamped on the rotating shaft 500, and one end of the bendable strip 300 is fixed on the mold core shaft 600 with traction. The end of the strip 300 is pressed with a rubber pressing roller 700, which is used to assist the lamination of the strip 300 and press the strip 300. When rotating the mold core shaft 600, the bendable strip 300 is tightly stacked on the outer contour surface of the mold core 101, the lamination direction of the bendable strip 300 should ensure that the orientation of the optical structure on the strip 300 is the same as the orientation of the lens structure on the mold core 101, so as to produce a Fresnel lens mold that meets the design requirements. The direction of the arrow represents the rotation direction of the rotating shaft 500 and the mold core shaft 600. Both the mold core shaft 600 and the rotating shaft 500 are rotatable under control, which can be manually rotated by manpower, or the rotating force can be provided by other power, such as a motor. The orientation of the mold core shaft 600 and the rotating shaft 500 can be horizontal or vertical, and it is only necessary to keep the mold core 101 and the wounded bendable strip 300 in the same plane.

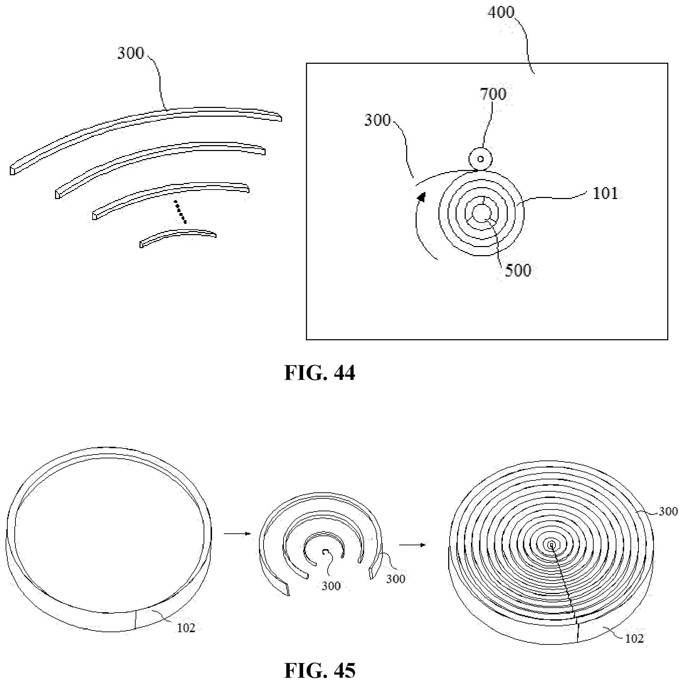

As an alternative of this embodiment, when the strip 300 is formed into several sections, as shown in FIG. 44, the mold core 101 is fixed on the flat plate 400, then the flat plate 400 fixed with the mold core 101 is clamped on the mold core 600, and the sectional strips 300 with optical structures are sequentially arranged according to the region parameters of Fresnel lenses designed in theory. First, fix the front end of the strip 300 closest to the mold core 101 on the mold core 101, the end of the strip 300 is pressed with a rubber pressing roller 700 , which is used to assist the lamination of the strip 300 and press the strip 300; rotate the mold core shaft 600, stack the strip 300 on the surface of the mold core 101, fix the end of this section of strip, and stack the strips in sequence for fixing, so as to manufacture the Fresnel lens mold that meets the design requirements. The direction of the arrow represents the rotation direction of the mold core shaft 600; the mold core shaft 600 is rotatable under control, and can be manually rotated by manpower, or can be rotated by other power, such as a motor and the like.

### Embodiment 6

A Fresnel lens mold including a reference unit and a stacked strip, the strip being bendable, and one edge of the strip is provided with an optical structure which is the same as a lens structure of the designed Fresnel lens on the corresponding annular strip, the strips are stacked on the inside of the reference unit according to the designed Fresnel lens parameters. The manufacturing process of the Fresnel lens mold is as follows:
S1, designing the corresponding Fresnel lens shape and lens structure parameters according to the requirements of optical characteristics, the Fresnel lens is decomposed into layers of annular strips by computer simulation technology, and the outermost annular strip is taken as the reference unit, that is, the reference strip, and the corresponding reference strip parameters and annular strip parameters are obtained.
S2, manufacturing the corresponding reference strip according to the design parameters of the reference strip; selecting a bendable strip, and processing an optical structure on one edge of the strip which is the same as the lens structure on the corresponding annular strip of the Fresnel lens by turning, milling or grinding according to the annular strip parameters;
S4, according to the position of the annular strip of the Fresnel lens and the orientation of the lens structure on the annular strip, the strip with the optical structure stacked is obtained at the inner side of the reference strip to obtain a Fresnel lens mold.

As an alternative of this embodiment, as shown in FIG. 45, the strip 300 is formed into several segments, which are sequentially stacked on the inner side of the reference strip 102 according to the position of the annular strip in the designed Fresnel lens and the orientation of the lens structure on the annular strip so as to manufacture the corresponding Fresnel lens mold.

As an alternative of this embodiment, the strip is formed as a whole and sequentially stacked on the inner side of the reference strip according to the position of the annular strip in the designed Fresnel lens and the orientation of the lens structure on the annular strip so as to manufacture the corresponding Fresnel lens mold.

The Fresnel lens mold of the embodiment of the present application includes stacked strips, where the strip is bendable, and an optical structure is provided at one edge of the strip, which is the same as a lens structure of the designed Fresnel lens on the corresponding annular strip. The Fresnel lens mold will not be limited by the size of the processing lathe, and the strip is processed according to the designed Fresnel lens, thereby ensuring the processing accuracy of the Fresnel lens mold. According to the manufacturing method of the Fresnel lens mold provided by the embodiment of the present application, through the steps of designing the Fresnel lens by optical characteristics, processing parts and stacking strips, the manufactured Fresnel lens mold can completely correspond to the designed Fresnel lens, and is not limited to a specific shape and size. Fresnel lens molds and partial Fresnel lens molds with any sizes and non-concentric rings can be manufactured.

### Embodiment 7

A method for manufacturing Fresnel lens, in which the Fresnel lens molds manufactured in Embodiments 1-6 are made into Fresnel lenses by coating and transfer printing or hot-pressing or pressure injection molding.

Coating and transfer printing is to evenly coat the optical glue on the base film or the Fresnel lens mold, so that the base film and the Fresnel lens mold are closely attached. Then radiation curing or heat curing, or reaction curing are applied to cure the optical glue to form a lens structure complementary to the optical structure on the Fresnel lens mold, and then separate the base film from the Fresnel lens mold. Because the adhesive property between the optical glue and the base film is stronger than the adhesive property of the Fresnel lens mold, the optical structure on the Fresnel lens mold is transfer printed to the base film to form an optical film with the designed Fresnel lens structure, and the designed Fresnel lens can be obtained by cutting. In the process of separating the base film from the Fresnel lens mold, a layer of release agent can be applied on the Fresnel lens mold in advance to facilitate the separation of the optical glue and the Fresnel lens mold.

Hot-pressing is to heat the mold or heat and melt the base film, and after which, by applying pressure between the base film and the Fresnel lens mold, or applying pressure directly on the Fresnel lens mold, or applying vacuuming, a negative pressure can be formed on one side of the base film in order to achieve the pressurizing effect. After a certain time, the mold is cooled and molded, and the base film and the Fresnel lens mold are separated. The optical structure on the Fresnel lens mold is copied to the base film to form an optical film with a designed Fresnel lens structure, and the designed Fresnel lens can be obtained by cutting.

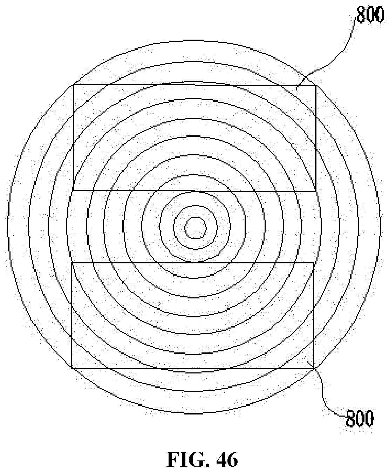

In addition, the formed optical film with the designed Fresnel lens structure is shown in FIG. 46. According to the size of the optical film for display, a required Fresnel lens optical film 800 is cut out from the base film on which the whole Fresnel lens is made so as to be manufactured as an important optical element of the projection screen or other display devices, which is made into a corresponding finished product for modulating the imaging display effect of the projection screen or other display devices. The optical film can also be used as the core component of solar concentrating and pumping laser weapons, and the corresponding products can be tailored according to the requirements.

The process of manufacturing the Fresnel lens according to the embodiment of the present application is simple, and the obtained Fresnel lens has high precision. In addition, the manufacturing method can be used for manufacturing large-size Fresnel lens, and the obtained large-size Fresnel lens has no spliced seam, thus ensuring the performance of Fresnel lens, and can be used in situations with high requirements to the apparent quality of Fresnel lens such as electronic display, and further promote the development of downstream industries.

The above description only illustrates preferred embodiments of the present application, and it should be noted that the above preferred embodiments should not be regarded as a limitation to the present application, and the protection scope of the present application should be defined by the claims. For those of ordinary skill in the art, several improvements and modifications may be made without departing from the spirit and scope of the present application, and these improvements and modifications are also deemed to fall within the protection scope of the present application.

## Claims

1. A Fresnel lens mold, comprising a stacked strip, wherein the strip is bendable, and
wherein an optical structure, which is the same as a lens structure on a corresponding annular strip of a designed Fresnel lens, is provided at one edge of the strip.

2. The Fresnel lens mold according to claim 1, further comprising a reference unit, wherein the strip is stacked on a contour surface of the reference unit based on the reference unit.

3. The Fresnel lens mold according to claim 2, wherein a contour shape of the reference unit is the same as an annular strip shape of a corresponding area of the Fresnel lens, and the strip is stacked on one contour surface of the reference unit according to a position of the respective annular strips in the Fresnel lens and an orientation of the lens structures on the annular strips.

4. The Fresnel lens mold according to claim 3, wherein the reference unit is provided with the same optical structure as the lens structure in the corresponding area of the Fresnel lens, and the strip is stacked on one contour surface of the reference unit according to the position of the respective annular strips in the Fresnel lens and the orientation of the lens structures on the annular strips.

5. The Fresnel lens mold according to claim 3, wherein an outer contour shape of the reference unit is in a shape circle, ellipse, parabola, polygon or a part of these shapes.

6. The Fresnel lens mold according to claim 2, wherein the reference unit is a reference strip, and the shape of the reference strip is the same as the shape of the outermost annulus of the Fresnel lens, and the strip is stacked on an inner side of the reference strip according to the position of the annular strip of the Fresnel lens and the orientation of the lens structures on the annular strip.

7. The Fresnel lens mold according to claim 2, wherein the reference unit is a reference strip, and the shape of the reference strip is the same as the shape of the innermost annular strip of the Fresnel lens, and the strip is stacked on an outer side of the reference strip according to the position of the annular strip of the Fresnel lens and the orientation of the lens structures on the annular strip.

8. The Fresnel lens mold according to claim 2, further comprising a fixing unit, wherein the reference unit is arranged on the fixing unit.

9. A method for manufacturing a Fresnel lens mold, comprising the following steps:
S1, designing a Fresnel lens: designing the annular strip shape and lens structure parameters of Fresnel lens according to the requirements of optical characteristics, disassembling the Fresnel lens into an annular strip to obtain corresponding annular strip parameters, wherein the annular strip parameters comprise the structural parameters of each lens on the annular strip;
S2, processing parts: selecting a bendable strip, and processing an optical structure on one edge of the strip which is the same as the lens structure on the corresponding annular strip of the Fresnel lens; and
S3, stacking the strip: stacking the strip with the optical structures according to a position of the annular strip of the Fresnel lens and an orientation of the lens structure on the annular strip, to manufacture a Fresnel lens mold.

10. The manufacturing method according to claim 9, wherein the strip is stacked by means of adhesive, mechanical fixation or magnetic adsorption.

11. A method for manufacturing a Fresnel lens mold, comprising the following steps:
S1, designing a Fresnel lens: designing the annular strip shape and lens structure parameters of Fresnel lens according to the requirements of optical characteristics, disassembling the Fresnel lens into a reference unit and an annular strip so as to obtain corresponding reference unit parameters and annular strip parameters;
S2, processing parts: according to the parameters of the reference unit, the corresponding reference unit is processed by turning, milling or grinding; selecting a bendable strip, and processing an optical structure on one edge of the strip which is the same as the lens structure on the corresponding annular strip of the Fresnel lens by turning milling, or grinding according to the annular strip parameters; and
S3, stacking strips: fixing the position of the reference unit according to the designed Fresnel lens; stacking the strip with the optical structure on one contour surface of the reference unit according to the position of the annular strip of the Fresnel lens and the orientation of the lens structure on the annular strip to make a Fresnel lens mold.

12. The manufacturing method according to claim 11, wherein a contour shape of the reference unit is the same as an annular strip shape of the corresponding area of the Fresnel lens, and the strips are stacked on one contour surface of the reference unit according to the positions of the respective annular strips in the Fresnel lens and the orientation of the lens structures on the annular strips.

13. The manufacturing method according to claim 12, wherein the reference unit is processed with the same optical structure as the lens structure on the corresponding annular strip of the Fresnel lens, and stacking the strips continuously or in sections on one profile surface of the reference unit according to the position of the annular strip in the Fresnel lens and the orientation of the lens structure on the annular strip.

14. The manufacturing method according to claim 11, wherein the reference unit is a reference strip, and the shape of the reference strip is the same as the shape of the outermost annulus of the Fresnel lens, and stacking the strips continuously or in sections on an inner side of the reference strip according to the position of the annular strip in the Fresnel lens and the orientation of the lens structure on the annular strip.

15. The manufacturing method according to claim 11, wherein the reference unit is a reference strip, and the shape of the reference strip is the same as the shape of the innermost annular strip of the Fresnel lens, and stacking the strips continuously or in sections on one outer side of the reference strip according to the position of the annular strip in the Fresnel lens and the orientation of the lens structure on the annular strip.

16. A method for manufacturing a Fresnel lens mold, comprising the following steps:
S1, designing a Fresnel lens: designing the annular strip shape and lens structure parameters of Fresnel lens according to the requirements of optical characteristics, disassembling the designed Fresnel lens into an annular strip so as to obtain corresponding annular strip parameters, wherein the annular strip parameters comprise the structural parameters of each lens on the annular strip;
S2, processing parts: selecting a bendable strip, and processing an optical structure on one edge of the strip which is the same as the lens structure on the corresponding annular strip of the Fresnel lens according to the annular strip parameters;
S3, stacking strips: determining a reference unit and taking the reference unit as basis, stacking the strips with the optical structure according to the position of the annular strip of the Fresnel lens and the orientation of the lens structure on the annular strip, and then removing the reference unit to obtain a Fresnel lens mold.

17. A method for manufacturing a Fresnel lens, using the Fresnel lens mold according to claim 1, wherein the Fresnel lens is manufactured by means of liquid glue coating and curing or hot-pressing molding, and the liquid glue coating and curing method comprises at least one of radiation curing, thermal curing or reaction curing.
